# EUROPEAN PATENT SPECIFICATION

(11) **EP 3 276 149 B1**
(45) Date of publication and mention of the grant of the patent: **10.07.2019**
(21) Application number: 16768801.9
(22) Date of filing: 23.03.2016
(51) Int. Cl.: F02D 35/00, B62J 99/00, B62M 7/02, F01N 3/00, F01N 3/24, F01N 13/00, F01N 13/08, F01N 3/10, F01N 13/18

(54) **MOTORCYCLE**
MOTORRAD
MOTOCYCLETTE

(30) Priority: 26.03.2015 JP 2015065309
(43) Date of publication of application: 31.01.2018
(73) Proprietor: Honda Motor Company Limited, Tokyo 107-8556 (JP)
(72) Inventor: SHOMURA, Takaaki, Wako-shi Saitama 351-0193 (JP); NAKAGAWA, Koji, Wako-shi Saitama 351-0193 (JP); SHIMIZU, Norifumi, Wako-shi Saitama 351-0193 (JP); TAKADA, Yasuhiro, Wako-shi Saitama 351-0193 (JP); KAWASAKI, Shinji, Tokyo 107-8556 (JP)
(74) Representative: Piésold, Alexander James
(86) International application number: PCT/JP2016/059133
(87) International publication number: WO 2016/152898

(56) References cited:
- EP-A1- 2 159 393
- EP-A2- 1 749 987
- EP-A2- 1 898 062
- EP-A2- 2 489 847
- WO-A1-2011/111156
- JP-A- H06 159 044
- JP-A- H08 303 236
- JP-A- H08 319 824
- JP-A- 2006 348 887
- JP-A- 2008 190 505
- JP-A- 2011 051 417
- JP-A- 2013 113 279
- JP-A- 2014 137 001

## Description

### Technical Field

The present invention relates to an improvement in a motorcycle provided with an exhaust gas sensor.

### Background Art

An exhaust system of an engine provided with an exhaust gas sensor which can detect exhaust gas components in an exhaustion gas is known (for example, refer to Patent Literature 1 (Fig. 2).).

As shown in Fig. 2 of Patent Literature 1, an exhaust system (6) of an engine (parenthesized numbers denote reference signs described in Patent Literature 1. The same applies hereinafter.) is provided with an exhaust pipe (7) extending from an exhaust port of the engine and a muffler (8) connected to a downstream end part (7a) of the exhaust pipe (7), and the downstream end part (7a) is accommodated in the muffler (8). A three way catalyst (10) (hereinafter referred to as "catalyst".) is disposed in the exhaust pipe (7), and an O₂ sensor (14) (hereinafter referred to as "exhaust gas sensor".) is disposed on the muffler (8) on the downstream side of the catalyst (10).

EP 2 489 847 discloses a saddle ride type vehicle with an exhaust pipe connected to an exhaust port of the engine and an oxygen sensor attached at this connection portion.

EP 1 749 987 discloses an exhaust sensor with an oxygen system attached to the exhaust pipe.

In a motorcycle, it is preferable that an exhaust gas sensor is disposed in such a position which is unlikely to affect the layout of other members. At the same time, it is desirable that it is disposed in such a position which is unlikely to be affected by scattering stones.

However, motorcycles have many portions where the exhaust pipe and muffler are exposed to the outside, which has been posing a great limitation on the arrangement of the exhaust gas sensor.

For a motorcycle provided with an exhaust gas sensor, a technology to arrange an exhaust gas sensor without affecting the layout of other members, while disposing the exhaust gas sensor in a portion which is unlikely to be affected by the influence of scattering stones kicked up, is desired.

### Citation List

### Patent Literature

Patent Literature 1: International Patent Publication No. WO 2005/075805

### Summary of Invention

### Technical Problem

An object of the present invention is to provide a technology to, in a motorcycle provided with an exhaust gas sensor, suppress the influence on the layout of other members, while preventing the influence of scattering stones kicked up.

### Solution to Problem

The invention according to claim 1 is a motorcycle comprising an engine, an exhaust pipe connected to an exhaust port of the engine, a catalyst provided in the exhaust pipe, and an exhaust gas sensor which can detect exhaust gas components in the exhaust pipe provided in the exhaust pipe, the exhaust pipe including a connecting part connected to the exhaust port, a first curved part curved downwardly from the connecting part, a hanging part linearly extending downwardly from the first curved part, a second curved part curved at the lower end toward the rear of the vehicle of the hanging part, and a lower part extending to the rear of the vehicle through below of the engine from the second curved part, the catalyst being supported by an upper part of the hanging part, the longitudinal direction of the catalyst being along the hanging part, and an angle between a central axis in a longitudinal direction of the lower part and a central axis in a longitudinal direction of the hanging part being set to 0<Θ<90°, characterised in that the exhaust gas sensor is disposed on a lower part of the hanging part and below the catalyst, and in that the exhaust gas sensor is disposed to the rear of the hanging part, as viewed in a side view of the vehicle, in a manner of being nipped at a position where the lower part of the hanging part and a crankcase are opposed to each other.

In the invention according to claim 2, in the exhaust pipe, at least the first curved part, the hanging part and the second curved part are formed by bonding one half body and another half body which is disposed to oppose the half body.

In the invention according to claim 3, a joint part of the one half body and the other half body is disposed so as to be oriented in the front and back directions of the vehicle.

In the invention according to claim 4, the exhaust pipe includes a boss part which supports the exhaust gas sensor, and the boss part is provided to be bonded between one half body and the other half body.

In the invention according to claim 5, wiring is extending from the exhaust gas sensor, and the wiring is extending to the rear of the vehicle along the lower part of the engine.

In the invention according to claim 6, the exhaust gas sensor is an oxygen sensor and also a heaterless sensor.

In the invention according to claim 7, the exhaust pipe is further provided with an upstream exhaust gas sensor on the upstream side of the catalyst.

In the invention according to claim 8, a motorcycle comprises an engine, an exhaust pipe connected to an exhaust port of the engine, a catalyst provided in the exhaust pipe, and an exhaust gas sensor which can detect exhaust gas components in the exhaust pipe provided in the exhaust pipe, the exhaust pipe including a connecting part connected to the exhaust port, a first curved part curved downwardly from the connecting part, a hanging part linearly extending downwardly from the first curved part, a second curved part curved at the lower end to the rear of the vehicle of the hanging part, and a lower part extending to the rear of the vehicle through below of the engine from the second curved part, the catalyst being supported by an upper part of the hanging part, the longitudinal direction of the catalyst being along the hanging part, characterised in that the exhaust gas sensor is disposed on a lower part of the hanging part and below the catalyst, and as viewed in the side view of the vehicle, being disposed to the rear of the hanging part, in that, in the exhaust pipe, at least the first curved part, the hanging part and the second curved part are formed by bonding one half body and another half body which is disposed to oppose the one half body, in that the exhaust pipe comprises a boss part supporting the exhaust gas sensor, and in that the boss part is provided to be bonded between the one half body and the other half body.

### Advantageous Effects of Invention

In the invention according to claim 1, the exhaust gas sensor is disposed on a lower part of the hanging part constructing the exhaust pipe and below the catalyst. Since the lower part of the hanging part is a dead space where no other member is disposed, it can reduce the influence on the layout of other members. Furthermore, the exhaust gas sensor is disposed behind the hanging part in the direction of the vehicle, so that it is unlikely to be hit by scattering stones, etc.

In the invention according to claim 2, the first curved part, the hanging part and the second curved part of the exhaust pipe are formed by bonding one and the other half bodies. In the case of the exhaust pipe having a structure where two half bodies are bonded, even if the curvature has a small radius, the exhaust pipe can be readily formed.

In the invention according to claim 4, the exhaust pipe is provided with the boss part as a supporting member, and the boss part is caused to support the exhaust gas sensor. Therefore, as opposed to the case where there is no the boss part, it is possible to cause the exhaust pipe to support the exhaust gas sensor with high rigidity.

In the invention according to claim 5, the wiring extending from the exhaust gas sensor is extending to the rear of the vehicle along a lower part of the engine. By running the wiring along the lower part of the engine, the wiring can be less noticeable. As a result, the appearance quality of the vehicle can be improved.

In the invention according to claim 6, the exhaust gas sensor is a heaterless sensor. Since the exhaust gas sensor is disposed immediately behind the engine, the exhaust gas sensor is likely to be heated. As the exhaust gas sensor which is likely to be heated, an inexpensive heaterless type sensor can be used. As a result, an increase in the cost of the motorcycle can be suppressed.

In the invention according to claim 7, in the exhaust pipe, the exhaust gas sensor is provided on the downstream side of the catalyst. While an upstream exhaust gas sensor is provided on the upstream side of the catalyst. By measuring components of exhaust gas with the exhaust gas sensor and the upstream exhaust gas sensor on the upstream side and the downstream side of the catalyst, deterioration determination of the catalyst can be performed in real time.

### Brief Description of Drawings

Fig. 1 is a right side view of a motorcycle according to the present invention.
Fig. 2 is an enlarged view of a main part of Fig. 1.
Fig. 3 is a three-arrow view of Fig. 2.
Fig. 4 is an enlarged view of a main part of Fig. 3 for illustrating the arrangement of an exhaust gas sensor.
Fig. 5 is a cross-sectional view taken along line 5 - 5 of Fig. 2.
Fig. 6 is a cross-sectional view taken along line 6 - 6 in Fig. 2.

### Description of Embodiments

Embodiments of the present invention will be described below in detail. In the drawings and examples, "up", "down", "front", "rear", "left" and "right" each indicates the direction seen from the rider to ride the motorcycle.

### Examples

The examples of the present invention will be described with reference to the drawings.

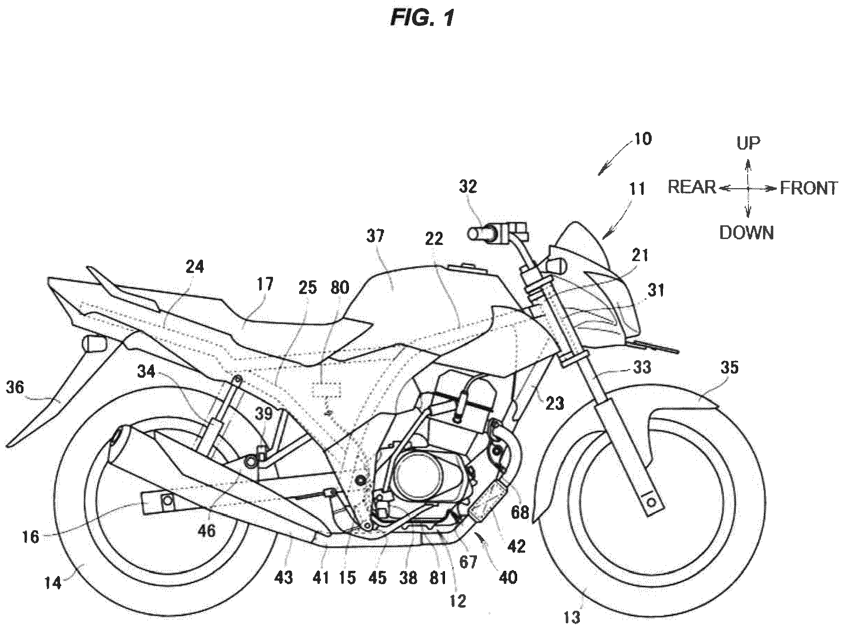

As shown in Fig. 1, a motorcycle 10 is a saddle-ride type vehicle which includes a body frame 11, an engine 12 suspended on the body frame 11, a front wheel 13 streerably provided on the body frame 11, a swing arm 16 freely slidably supported on a pivot portion 15 of the body frame 11, a rear wheel 14 provided on the rear end of the swing arm 16, and a seat 17 which is provided on the body frame 11 between the front wheel 13 and the rear wheel 14 and on which an occupant is seated, in which the occupant rides on the seat 17.

The body frame 11 is mainly composed of a head pipe 21 rotatably supporting the front wheel 13, a main frame 22 and a down frame 23 extending obliquely downward to the rear of the vehicle from the head pipe 21 approximately arcuately in a convex manner, the pivot portion 15 provided at the lower end of the main frame 22, a seat rail 24 extending behind from a middle portion of the main frame 22, a support frame 25 span between the seat rail 24 and the pivot portion 15.

A steering shaft 31 is pivotably provided on the head pipe 21, a steering handlebar 32 is attached at the upper end of the steering shaft 31, and a front fork 33 which supports the front wheel 13 is extending from the lower end of the steering shaft 31. A cushion unit 34 is provided between the swing arm 16 and the seat rail 24. A front fender 35 is attached to the front fork 33, and a rear fender 36 is attached to the seat rail 24.

A fuel tank 37 is disposed behind the steering handlebar 32, and the seat 17 is disposed behind the fuel tank 37 in a continuous manner. The fuel tank 37 is supported by the main frame 22, and the seat 17 is supported by the seat rail 24. A rider's step 38 on which the rider is to rest his/her feet is extending from the engine 12 outwardly in the width direction of the vehicle, and a pillion passenger's step 39 on which the pillion passenger can rest his/her feet is extending outwardly in the width direction of the vehicle from the support frame 25.

An exhaust system 40 is extending from the engine 12, which is mainly composed of an exhaust pipe 41, a catalyst 42 interposed in the course of the exhaust pipe 41, and a muffler 43 connected at the downstream end of the exhaust pipe 41. The upstream end of the exhaust pipe 41 is attached to the engine 12, the rear part of the exhaust pipe 41 is attached to the pivot portion 15 via a first stay 45, and the muffler 43 is attached to the pillion passenger's step 39 via a second stay 46.

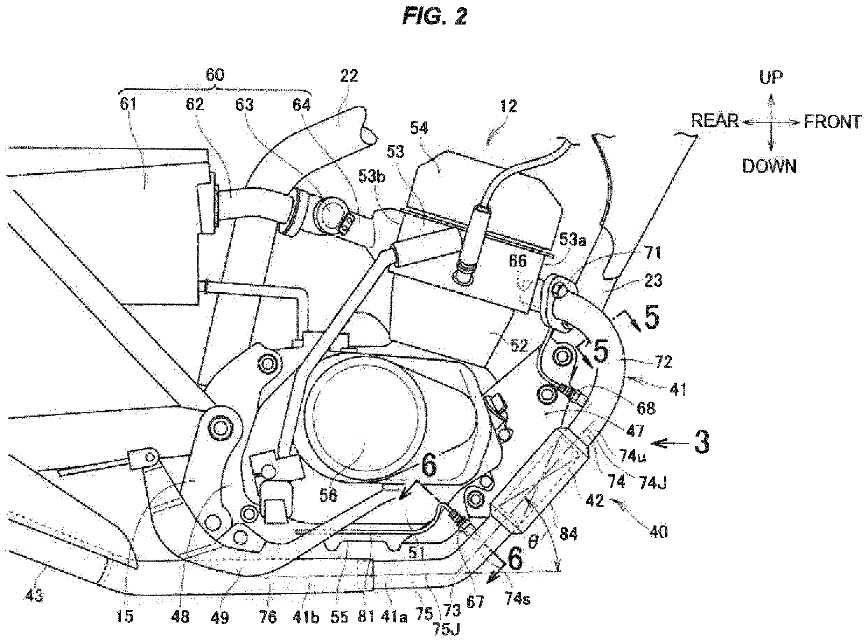

As shown in Fig. 2, the engine 12 is attached to the lower end of the down frame 23 via a front engine hanger 47, and is attached to the pivot portion 15 via a rear engine hanger 48. A brake pedal 49 is rotatably provided to the pivot portion 15.

The engine 12 includes a crankcase 51, a cylinder block 52 which is attached to be mounted on the top face of the crankcase 51, a cylinder head 53 which is attached to be mounted on the top face of the cylinder block 52, and a head cover 54 which is attached to be mounted on the top face of the cylinder head 53. An oil pan 55 is attached on the bottom face of the crankcase 51 from the bottom to the top. A clutch cover 56 is attached to the right side, which is the front side in the figure, of the crankcase 51.

An intake device 60 is coupled to a rear side 53b of the cylinder head 53 which is composed of an air cleaner 61, a connecting tube 62, a throttle body 63, and an air inlet pipe 64. An exhaust port 66 is provided on a front face 53a of the cylinder head 53, and the exhaust system 40 is connected to the exhaust port 66. The exhaust system 40 has the exhaust pipe 41 connected to the exhaust port 66. The catalyst 42 is provided in the exhaust pipe 41, and an exhaust gas sensor 67 which can detect exhaust gas components in the exhaust pipe 41 is provided in the exhaust pipe 41 on the downstream side of the catalyst 42. It is to be noted that, on the upstream side of the catalyst 42 and inside the exhaust pipe 41, an upstream exhaust gas sensor 68 which can detect exhaust gas components is further provided in the exhaust pipe 41.

The exhaust gas sensor of the example uses an oxygen sensor (O₂ sensor) which measures the oxygen concentration in the exhaust gas. The O₂ sensor is preferable as it is economical, but the exhaust gas sensor is not limited to the O₂ sensor, and any sensor which can detect components in the exhaust gas can be used, regardless of the type. For example, CO sensors, NOₓ sensors, etc. are included.

In the exhaust pipe 41, part of a hanging part 74 corresponding to the portion in which the catalyst 42 is disposed has larger inner diameter and outer diameter of the exhaust pipe 41 than other portions of the hanging part 74, and therefore the portion in which the catalyst 42 is disposed will be referred to as an exhaust pipe bulge portion 84. The catalyst 42 has an element which functions as a catalyst supported on a carrier.

The exhaust pipe 41 includes a connecting part 71 connected to the exhaust port 66, a first curved part 72 curved downwardly from the connecting part 71, the hanging part 74 extending downwardly from the first curved part 72, a second curved part 73 curved to the rear of the vehicle at the lower end of the hanging part 74, a lower part 75 extending to the rear of the vehicle through below the engine 12 from the second curved part 73, and a second lower part 76 extending to the rear of the vehicle from the lower part 75, and the downstream end of the second lower part 76 is connected to the muffler 43.

The hanging part 74 of the exhaust pipe 41 is inclined downwardly toward the rear in the longitudinal direction of the vehicle, and the exhaust gas sensor 67 is supported in the direction perpendicular to the inclination of the hanging part 74. The exhaust gas sensor 67 is disposed in a manner of being nipped between the exhaust pipe 41 and the crankcase 51 of the engine 12 as viewed in the side view of the vehicle. In detail, an angle Θ formed by a central axis 75J (horizontal line) in the longitudinal direction of a lower part 75 of the exhaust pipe 41 and a central axis 74J in longitudinal direction of the hanging part 74 of the exhaust pipe 41 is set to be 0 <Θ<90 °, and is disposed in a manner of being nipped between a lower part of the hanging part 74 and the crankcase 51.

In the example, a first exhaust pipe 41a is composed of a first curved part 72, the hanging part 74, the second curved part 73, and the lower part 75, a second exhaust pipe 41b which was a component of the second lower part 76 is connected to the downstream end of the first exhaust pipe 41a. As will be illustrated in the next figure, the first exhaust pipe 41a is formed by joining half bodies, and the second exhaust pipe 41b is a seamless tubular piping. It is to be noted that it is acceptable to construct the second exhaust pipe 41b in a manner similar to the first exhaust pipe 41a by joining half bodies, and to construct the second exhaust pipe 41b integrally with the first exhaust pipe 41a.

The catalyst 42 is supported by an upper part 74u of the hanging part 74 configuring the exhaust pipe 41, and the exhaust gas sensor 67 is a lower part 74s of the hanging part 74 and is disposed below the catalyst 42, and as viewed in the side view of the vehicle, is disposed to the rear of the vehicle of the hanging part 74.

A wiring 81 is extending from the exhaust gas sensor 67, and the wiring 81 is extending to the rear of the vehicle along a lower part of the engine 12. Referring back to Fig. 1, the wiring 81 extending from the exhaust gas sensor 67 is connected to an engine control unit 80 (ECU) disposed below the seat 17. It should be noted that the exhaust gas sensor 67 is an oxygen sensor and also a heaterless sensor.

Subsequently, the structures of the exhaust system and its surrounding parts, when seen from the front of the vehicle, etc. will be described.

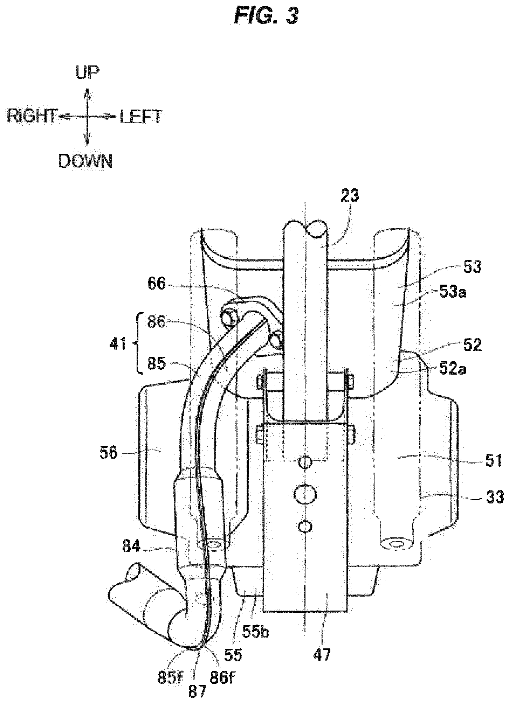

As shown in Fig. 3, in the exhaust pipe 41, the first curved part 72, the hanging part 74, and the second curved part 73 is formed by bonding one of the half bodies 85 and the other half body 86 which is disposed to oppose the half body 85 which serves as a joint 87 at flange portions 85f and 86f. In the case of the exhaust pipe 41 having a structure where one half body 85 and the other half body 86 are bonded, even in the case of a small radius of curvature according to the curvature, the exhaust pipe 41 can be readily formed. Therefore, the degree of freedom of design relating to the routing of the exhaust pipe 41 can be increased.

Furthermore, the above structure allows molding of one and the other half bodies 85, 86 with a seat metal press with ease. Press molding readily allows molding even in a structure having the exhaust pipe bulge portion 84. In addition, in the exhaust pipe 41, that joint 87 is disposed to be oriented in the front - back direction of the vehicle, which can suppress air resistance to a low level.

The exhaust pipe 41 is extending downwardly on the right side in the width direction of the vehicle in a manner of avoiding the down frame 23 extending downwardly at the center in the width direction of the vehicle from the front face 53a of the cylinder head 53. The exhaust pipe 41 extends below from a bottom face 55b of the oil pan 55, and then extends to the rear of the vehicle through below the clutch cover 56 jutting out the lateral side of the vehicle.

Subsequently, the arrangement of the exhaust gas sensor will be described in detail.

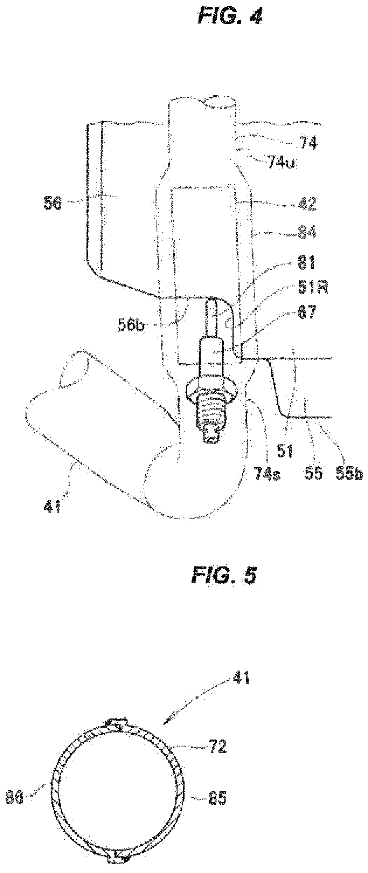

As shown in Fig. 4, the exhaust gas sensor 67 attached to the exhaust pipe 41 is disposed on the lower part 74s of the hanging part 74 and below the catalyst 42, and is disposed on the back side of the vehicle from the hanging part 74. In Fig. 4, the exhaust pipe 41, which is positioned on the front side in the figure of the exhaust gas sensor 67, is illustrated with an imaginary line for facilitating the understanding about the arrangement of the exhaust gas sensor 67.

The exhaust gas sensor 67 is positioned on the outside in the width direction of the vehicle from an outer face 51R of one side of the crankcase 51, below a bottom face 56b of the clutch cover 56 which is a component of the crankcase 51, and, on the back side of the vehicle from the hanging part 74 where the exhaust pipe 41 and the crankcase 51 oppose each other. Such an arrangement allows the exhaust gas sensor 67 to be compactly disposed in a dead space of the vehicle, and thus does not disadvantageously affect the arrangement of other parts.

As shown in Fig. 5, in the first curved part 72, the exhaust pipe 41 has a structure which is formed by bonding one half body 85 and the other half body 86.

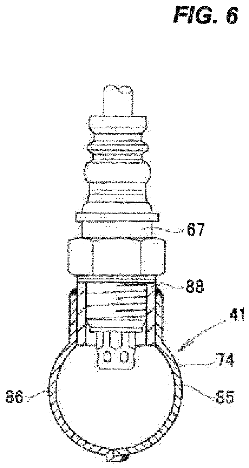

As shown in Fig. 6, the hanging part 74 of the exhaust pipe 41 formed by bonding one half body 85 and the other half body 86 is provided with a boss part 88 which supports the exhaust gas sensor 67, and the boss part 88 are provided to be bonded between one half body 85 and the other half body 86 by fillet welding.

The exhaust pipe 41 is provided with the boss part 88 as a supporting member, and the boss part 88 is caused to support the exhaust gas sensor 67. Therefore, as opposed to the case where there is no the boss part, it is possible to cause the exhaust pipe 41 to support the exhaust gas sensor 67 with high rigidity.

The actions of the motorcycle provided with the exhaust gas sensor stated above will be now described.
Referring back to Fig. 2, the exhaust gas sensor 67 is disposed on the lower part 74s of the hanging part 74 configuring the exhaust pipe 41 and below the catalyst 42. Since the lower part 74s of the hanging part 74 is a dead space where no other member is disposed, it can reduce the influence on the layout of other members. Furthermore, the exhaust gas sensor 67 is disposed behind the hanging part 74 in the direction of the vehicle, so that it is unlikely to be hit by scattering stones, etc.

The wiring 81 extending from the exhaust gas sensor 67 is extending to the rear of the vehicle along a lower part of the engine 12. By running the wiring along the lower part of the engine 12, the wiring 81 can be less noticeable. As a result, the appearance quality of the vehicle can be improved.

The exhaust gas sensor 67 is a heaterless sensor. Since the exhaust gas sensor 67 is disposed immediately behind the engine 12, the exhaust gas sensor 67 is likely to be heated. As the exhaust gas sensor 67 which is likely to be heated, an inexpensive heaterless type sensor can be used. As a result, an increase in the cost of the motorcycle can be suppressed.

In the exhaust pipe 41, the exhaust gas sensor 67 is provided on the downstream side of the catalyst 42, while an upstream exhaust gas sensor 68 is provided on the upstream side of the catalyst 42. By measuring components of exhaust gas with the exhaust gas sensor 67 and the upstream exhaust gas sensor 68 on the upstream side of the catalyst 42 and the downstream side, deterioration determination of the catalyst 42 can be performed in real time.

Furthermore, the hanging part 74 of the exhaust pipe 41 is inclined downwardly toward the rear, supports the exhaust gas sensor 67 in the direction perpendicular to the inclination of the hanging part 74, and, as viewed in the side view of the vehicle, the exhaust gas sensor 67 is disposed in a manner of being nipped between the exhaust pipe 41 and the crankcase 51 of the engine 12. Since the exhaust gas sensor 67 is disposed by utilizing a space between the hanging part 74 of the exhaust pipe 41 and the crankcase 51 of the engine 12, which tends to be a dead space, spaces in a motorcycle with limited arrangement spaces can be effectively utilized. Furthermore, the hanging part 74 by which the exhaust gas sensor 67 is supported is inclined downwardly toward the rear, it is unlikely to keep rain water and drains rain water successfully.

It should be noted that the present invention, are applied to the motorcycle in the embodiments, but it can be also applied to tricycles.

### Industrial Applicability

The present invention is suitable for a motorcycle provided with an exhaust gas sensor.

### Reference Signs List

10...Motorcycle, 12...Engine, 41...Exhaust pipe, 42...Catalyst, 43...Muffler, 51...Crankcase, 66...Exhaust port, 67...Exhaust gas sensor, 68...Upstream exhaust gas sensor, 71...Connecting part, 72...First curved part, 73...Second curved part, 74...Hanging part, 74u...Hanging part of upper part, 74s...Hanging part of lower part, 75...Lower part, 81...Wiring, 85...One half body, 86...Other half body, 88... Boss part.

## Claims

1. A motorcycle comprising:
an engine (12),
an exhaust pipe (41) connected to an exhaust port (66) of the engine (12),
a catalyst (42) provided in the exhaust pipe (41), and
an exhaust gas sensor (67) which can detect exhaust gas components in the exhaust pipe (41) provided in the exhaust pipe (41),
the exhaust pipe (41) including a connecting part (71) connected to the exhaust port (66), a first curved part (72) curved downwardly from the connecting part (71), a hanging part (74) linearly extending downwardly from the first curved part (72), a second curved part (73) curved at the lower end toward the rear of the vehicle of the hanging part (74), and a lower part (75) extending to the rear of the vehicle through below of the engine (12) from the second curved part (73),
the catalyst (42) being supported by an upper part (74u) of the hanging part (74), the longitudinal direction of the catalyst (42) being along the hanging part (74), and
an angle (Θ) between a central axis (75J) in a longitudinal direction of the lower part (75) and a central axis (74J) in a longitudinal direction of the hanging part (74) being set to 0<Θ<90°,
**characterised in that** the exhaust gas sensor (67) is disposed on a lower part (74s) of the hanging part (74) and below the catalyst (42), and **in that** the exhaust gas sensor (67) is disposed to the rear of the hanging part (74), as viewed in a side view of the vehicle, in a manner of being nipped at a position where the lower part (74s) of the hanging part (74) and a crankcase (51) are opposed to each other.

2. A motorcycle according to claim 1, wherein, in the exhaust pipe (41), at least the first curved part (72), the hanging part (74) and the second curved part (73) are formed by bonding one half body (85) and another half body (86) which is disposed to oppose the one half body (85).

3. A motorcycle according to claim 2, wherein a joint part (87) of the one half body (85) and the other half body (86) is disposed so as to be oriented in the front and back directions of the vehicle.

4. A motorcycle according to claim 2 or 3, wherein the exhaust pipe (41) comprises a boss part (88) supporting the exhaust gas sensor (67), and
the boss part (88) is provided to be bonded between the one half body (85) and the other half body (86).

5. A motorcycle according to any one of claims 1 to 4, wherein a wiring (81) is extending from the exhaust gas sensor (67), and
the wiring (81) is extending to the rear of the vehicle along a lower part of the engine (12).

6. A motorcycle according to any one of claims 1 to 5, wherein the exhaust gas sensor (67) is an oxygen sensor and also a heaterless sensor.

7. A motorcycle according to any one of claims 1 to 6, wherein the exhaust pipe (41) is further provided with an upstream exhaust gas sensor (68) on the upstream side of the catalyst (42).

8. A motorcycle comprising:
an engine (12),
an exhaust pipe (41) connected to an exhaust port (66) of the engine (12),
a catalyst (42) provided in the exhaust pipe (41), and
an exhaust gas sensor (67) which can detect exhaust gas components in the exhaust pipe (41) provided in the exhaust pipe (41),
the exhaust pipe (41) including a connecting part (71) connected to the exhaust port (66), a first curved part (72) curved downwardly from the connecting part (71), a hanging part (74) linearly extending downwardly from the first curved part (72), a second curved part (73) curved at the lower end to the rear of the vehicle of the hanging part (74), and a lower part (75) extending to the rear of the vehicle through below of the engine (12) from the second curved part (73),
the catalyst (42) being supported by an upper part (74u) of the hanging part (74), the longitudinal direction of the catalyst (42) being along the hanging part (74),
**characterised in that** the exhaust gas sensor (67) is disposed on a lower part (74s) of the hanging part (74) and below the catalyst (42), and as viewed in the side view of the vehicle, being disposed to the rear of the hanging part (74),
**in that**, in the exhaust pipe (41), at least the first curved part (72), the hanging part (74) and the second curved part (73) are formed by bonding one half body (85) and another half body (86) which is disposed to oppose the one half body (85),
**in that** the exhaust pipe (41) comprises a boss part (88) supporting the exhaust gas sensor (67), and
**in that** the boss part (88) is provided to be bonded between the one half body (85) and the other half body (86).

## Patentansprüche

1. Motorrad, umfassend:
einen Motor (12),
ein Auspuffrohr (41), das mit einer Auspufföffnung (66) des Motors (12) verbunden ist,
einen Katalysator (42), der in dem Auspuffrohr (41) bereitgestellt ist, und
einen in dem Auspuffrohr (41) bereitgestellten Abgasssensor (67), der Abgaskomponenten in dem Auspuffrohr (41) erfassen kann,
wobei das Auspuffrohr (41) einen Verbindungsteil (71), der mit der Auspufföffnung (66) verbunden ist, einen ersten gekrümmten Teil (72), der von dem Verbindungsteil (71) nach unten hin gekrümmt ist, einen hängenden Teil (74), der sich von dem ersten gekrümmten Teil (72) linear nach unten hin erstreckt, einen zweiten gekrümmten Teil (73), der an dem unteren Ende hin zu dem Hinteren des Fahrzeugs des hängenden Teils (74) gekrümmt ist, und einen unteren Teil (75)beinhaltet, der sich von dem zweiten gekrümmten Teil (73) zu dem Hinteren des Fahrzeugs durch unterhalb des Motors (12) erstreckt,
wobei der Katalysator (42) von einem oberen Teil (74u) des hängenden Teils (74) gestützt wird, wobei die Längsrichtung des Katalysators (42) entlang des hängenden Teils (74) verläuft, und
ein Winkel (Θ) zwischen einer Mittelachse (75J) in einer Längsrichtung des unteren Teils (75) und einer Mittelachse (74J) in einer Längsrichtung des hängenden Teils (74) auf Θ < Θ < 90° gesetzt ist,
**dadurch gekennzeichnet, dass** der Abgasssensor (67) auf einem unteren Teil (74s) des hängenden Teils (74) und unterhalb des Katalysators (42) angeordnet ist, und dadurch, dass der Abgasssensor (67) zu dem Hinteren des hängenden Teils (74) angeordnet ist, gesehen in einer Seitenansicht des Fahrzeugs, auf eine Weise, dass er an einer Position eingeklemmt ist, wo der untere Teil (74s) des hängenden Teils (74) und ein Kurbelgehäuse (51) sich gegenseitig gegenüberliegen.

2. Motorrad nach Anspruch 1, wobei in dem Auspuffrohr (41) mindestens der erste gekrümmte Teil (72), der hängende Teil (74) und der zweite gekrümmte Teil (73) durch Bonden eines Halbkörpers (85) und eines anderen Halbkörpers (86), der angeordnet ist, dem einen Halbkörper (85) gegenüberzuliegen, gebildet sind.

3. Motorrad nach Anspruch 2, wobei ein Verbindungsteil (87) des einen Halbkörpers (85) und des anderen Halbkörpers (86) derart angeordnet ist, dass es in den vorderen und hinteren Richtungen des Fahrzeugs angeordnet ist.

4. Motorrad nach Anspruch 2 oder 3, wobei das Auspuffrohr (41) einen Nabenteil (88) umfasst, der den Abgasssensor (67) stützt, und
der Nabenteil (88) bereitgestellt ist, um zwischen dem einen Halbkörper (85) und dem anderen Halbkörper (86) gebondet zu werden.

5. Motorrad nach einem der Ansprüche 1 bis 4, wobei eine Leitung (81) sich von dem Abgasssensor (67) weg erstreckt und
die Leitung (81) sich entlang eines unteren Teils des Motors (12) zu dem Hinteren des Fahrzeugs erstreckt.

6. Motorrad nach einem der Ansprüche 1 bis 5, wobei der Abgasssensor (67) ein Sauerstoffsensor und ebenfalls ein wärmelos arbeitender Sensor ist.

7. Motorrad nach einem der Ansprüche 1 bis 6, wobei das Auspuffrohr (41) weiter mit einem stromaufwärtigen Abgasssensor (68) auf der stromaufwärtigen Seite des Katalysators (42) bereitgestellt ist.

8. Motorrad, umfassend:
einen Motor (12),
ein Auspuffrohr (41), das mit einer Auspufföffnung (66) des Motors (12) verbunden ist,
einen Katalysator (42), der in dem Auspuffrohr (41) bereitgestellt ist, und
einen in dem Auspuffrohr (41) bereitgestellten Abgasssensor (67), der Abgaskomponenten in dem Auspuffrohr (41) erfassen kann,
wobei das Auspuffrohr (41) einen Verbindungsteil (71), der mit der Auspufföffnung (66) verbunden ist, einen ersten gekrümmten Teil (72), der von dem Verbindungsteil (71) nach unten hin gekrümmt ist, einen hängenden Teil (74), der sich von dem ersten gekrümmten Teil (72) linear nach unten hin erstreckt, einen zweiten gekrümmten Teil (73), der an dem unteren Ende hin zu dem Hinteren des Fahrzeugs des hängenden Teils (74) gekrümmt ist, und einen unteren Teil (75) beinhaltet, der sich von dem zweiten gekrümmten Teil (73) zu dem Hinteren des Fahrzeugs durch unterhalb des Motors (12) erstreckt,
wobei der Katalysator (42) von einem oberen Teil (74u) des hängenden Teils (74) gestützt wird, wobei die Längsrichtung des Katalysators (42) entlang des hängenden Teils (74) verläuft, und
**dadurch gekennzeichnet, dass** der Abgasssensor (67) auf einem unteren Teil (74s) des hängenden Teils (74) und unterhalb des Katalysators (42) angeordnet ist, und, gesehen in der Seitenansicht des Fahrzeugs, an dem Hinteren des hängenden Teils (74) angeordnet ist,
dass in dem Auspuffrohr (41) mindestens der erste gekrümmte Teil (72), der hängende Teil (74) und der zweite gekrümmte Teil (73) durch Bonden eines Halbkörpers (85) und eines anderen Halbkörpers (86), der angeordnet ist, dem einen Halbkörper (85) gegenüberzuliegen, gebildet sind,
dass das Auspuffrohr (41) einen Nabenteil (88) umfasst, der den Abgasssensor (67) stützt, und
dass der Nabenteil (88) bereitgestellt ist, um zwischen dem einen Halbkörper (85) und dem anderen Halbkörper (86) gebondet zu werden.

## Revendications

1. Motocyclette comprenant :
un moteur (12),
un tuyau d'échappement (41) connecté à un orifice d'échappement (66) du moteur (12),
un catalyseur (42) fourni dans le tuyau d'échappement (41), et
un capteur de gaz d'échappement (67) qui peut détecter des composants de gaz d'échappement dans le tuyau d'échappement (41) fourni dans le tuyau d'échappement (41),
le tuyau d'échappement (41) incluant une partie de connexion (71) connectée à l'orifice d'échappement (66), une première partie incurvée (72) incurvée vers le bas depuis la partie de connexion (71), une partie suspendue (74) s'étendant linéairement vers le bas depuis la première partie incurvée (72), une seconde partie incurvée (73) incurvée à l'extrémité inférieure vers l'arrière du véhicule de la partie suspendue (74), et une partie inférieure (75) s'étendant à l'arrière du véhicule en dessous du moteur (12) depuis la seconde partie incurvée (73),
le catalyseur (42) étant supporté par une partie supérieure (74u) de la partie suspendue (74), la direction longitudinale du catalyseur (42) étant le long de la partie suspendue (74), et
un angle (Θ) entre un axe central (75J) dans une direction longitudinale de la partie inférieure (75) et un axe central (74J) dans une direction longitudinale de la partie suspendue (74) étant réglé à 0<Θ<90°,
**caractérisée en ce que** le capteur de gaz d'échappement (67) est disposé sur une partie inférieure (74s) de la partie suspendue (74) et en dessous du catalyseur (42), et **en ce que** le capteur de gaz d'échappement (67) est disposé à l'arrière de la partie suspendue (74), comme observé sur une vue latérale du véhicule, de manière à être pincé à une position où la partie inférieure (74s) de la partie suspendue (74) et un carter moteur (51) sont opposés l'un à l'autre.

2. Motocyclette selon la revendication 1, dans laquelle, dans le tuyau d'échappement (41), au moins la première partie incurvée (72), la partie suspendue (74) et la seconde partie incurvée (73) sont formées par liaison d'une première moitié de corps (85) et d'une autre moitié de corps (86) qui est disposée pour s'opposer à la première moitié de corps (85).

3. Motocyclette selon la revendication 2, dans laquelle une partie de joint (87) de la première moitié de corps (85) et de l'autre moitié de corps (86) est disposée de façon à être orientée dans les directions avant et arrière du véhicule.

4. Motocyclette selon la revendication 2 ou 3, dans laquelle le tuyau d'échappement (41) comprend une partie de bossage (88) supportant le capteur de gaz d'échappement (67), et
la partie de bossage (88) est fournie pour être liée entre la première moitié de corps (85) et l'autre moitié de corps (86).

5. Motocyclette selon l'une quelconque des revendications 1 à 4, dans laquelle un câblage (81) s'étend depuis le capteur de gaz d'échappement (67), et
le câblage (81) s'étend à l'arrière du véhicule le long d'une partie inférieure du moteur (12).

6. Motocyclette selon l'une quelconque des revendications 1 à 5, dans laquelle le capteur de gaz d'échappement (67) est un capteur d'oxygène et également un capteur sans élément chauffant.

7. Motocyclette selon l'une quelconque des revendications 1 à 6, dans laquelle le tuyau d'échappement (41) est en outre doté d'un capteur de gaz d'échappement amont (68) sur le côté amont du catalyseur (42).

8. Motocyclette comprenant :
un moteur (12),
un tuyau d'échappement (41) connecté à un orifice d'échappement (66) du moteur (12),
un catalyseur (42) fourni dans le tuyau d'échappement (41), et
un capteur de gaz d'échappement (67) qui peut détecter des composants de gaz d'échappement dans le tuyau d'échappement (41) fourni dans le tuyau d'échappement (41),
le tuyau d'échappement (41) incluant une partie de connexion (71) connectée à l'orifice d'échappement (66), une première partie incurvée (72) incurvée vers le bas depuis la partie de connexion (71), une partie suspendue (74) s'étendant linéairement vers le bas depuis la première partie incurvée (72), une seconde partie incurvée (73) incurvée à l'extrémité inférieure à l'arrière du véhicule de la partie suspendue (74), et une partie inférieure (75) s'étendant à l'arrière du véhicule en dessous du moteur (12) depuis la seconde partie incurvée (73),
le catalyseur (42) étant supporté par une partie supérieure (74u) de la partie suspendue (74), la direction longitudinale du catalyseur (42) étant le long de la partie suspendue (74),
**caractérisée en ce que** le capteur de gaz d'échappement (67) est disposé sur une partie inférieure (74s) de la partie suspendue (74) et en dessous du catalyseur (42), et comme observé sur la vue latérale du véhicule, étant disposé à l'arrière de la partie suspendue (74),
**en ce que**, dans le tuyau d'échappement (41), au moins la première partie incurvée (72), la partie suspendue (74) et la seconde partie incurvée (73) sont formées par liaison d'une première moitié de corps (85) et d'une autre moitié de corps (86) qui est disposée pour s'opposer à la première moitié de corps (85),
**en ce que** le tuyau d'échappement (41) comprend une partie de bossage (88) supportant le capteur de gaz d'échappement (67), et
**en ce que** la partie de bossage (88) est fournie pour être liée entre la première moitié de corps (85) et l'autre moitié de corps (86).
